# EUROPÄISCHE PATENTSCHRIFT

(11) **EP 1 319 565 B1**
(45) Veröffentlichungstag und Bekanntmachung des Hinweises auf die Patenterteilung: **30.11.2005**
(21) Anmeldenummer: 02024648.4
(22) Anmeldetag: 05.11.2002
(51) Int. Cl.: B60T 8/36, B60T 13/68, B60T 15/02

(54) **Magnetspulen-Drucksensoreinheit**
Solenoid and pressure sensor unit
Ensemble pour solénoide et capteur de pression

(30) Priorität: 14.12.2001 DE 10161497
(43) Veröffentlichungstag der Anmeldung: 18.06.2003
(73) Patentinhaber: WABCO GmbH & CO. OHG, 30453 Hannover (DE)
(72) Erfinder: Dreyer, Werner, 30826 Garbsen (DE); Kiel, Bernd, 31515 Wunstorf (DE); König, Heinz-Werner, 30890 Barsinghausen (DE); Schappler, Hartmut, 30455 Hannover (DE)
(74) Vertreter: Schrödter, Manfred

(56) Entgegenhaltungen:
- EP-A- 0 580 382
- DE-A- 4 227 084
- DE-A- 19 528 812
- DE-A- 19 918 070
- US-A- 4 828 335

## Beschreibung

Die Erfindung betrifft eine Magnetspulen-Drucksensoreinheit für mit Magnetregelventilen ausgestattete EBS-Modulatoren gemäß Oberbegriff des Anspruchs 1.

Es sind ABS-Magnetregelventile (z. B. Wabco ABS-Regelventil Nr. 472 195 010 0) bekannt, die zwei Magnetspulen aufweisende Ventilmagnete aufweisen zum Erhöhen, Senken und Halten des Druckes in den Bremszylindern während eines Bremsvorganges. Die Ventile sind als 2/2-Magnetventile aufgebaut und beim Druckaufbau sind beide Magnetspulen nicht erregt, so daß der am Eingang des ersten stromlos offenen Magnetventils anstehende Druck am Ausgang dieses Magnetventils zu den Bremszylindern durchgesteuert wird und daß das am Ausgang des ersten Magnetventils weiter angeschlossene zweite stromlos geschlossene Magnetventil gesperrt ist. Zum Druckhalten wird der Ventilmagnet des ersten Magnetventils erregt, dadurch wird dieses Ventil geschlossen und der am Eingang anstehende Druck wird vom Ausgang abgesperrt. Wird ein Druckabbau gewünscht, so wird zusätzlich zu dem Ventilmagneten des ersten Magnetventils auch der Ventilmagnet des zweiten Magnetventils erregt; das zweite Magnetventil wird geöffnet und der am Ausgang des ersten Magnetventils anstehende Bremszylinderdruck wird ins Freie entlüftet. Nachteilig ist, daß der ausgesteuerte Druck nicht bekannt ist; es kann nur die Radreaktion über die ABS-Elektronik erkannt werden. Defekte, wie fehlender Eingangsdruck, Ventilmagnetdefekte etc., können nicht erkannt werden.

Ferner sind Druckregelmodule (z. B. der Firma Knorr-Bremse) bekannt, die als wesentliche Komponenten zwei einzelne Ventilmagnetspulen und bereits einen integrierten Drucksensor aufweisen. Die Komponenten sind als Einzelgeräte in einem Gehäuse angeordnet, an dem sich ein Anschlußstecker mit Kontaktstiften befindet, an die die elektrischen Anschlußleitungen der Komponenten angelötet sind. Ein solches Modul ist kostenaufwendig herzustellen und benötigt viel Platz. Die Komponenten müssen aufwendig abgedichtet im Gehäuse installiert werden. Durch die im Fahrbetrieb auftretenden Schwingungen sind die Lötverbindungen störanfällig.

Es sind ferner Proportional-Magnetrelaisventile (z. B. Wabco Proportional-Relaisventil Nr. 480 202 004 0) bekannt, die als wesentliche Komponenten einen Proportional-Ventilmagneten, einen Drucksensor und ein integriertes Relaisventil aufweisen, die in einem geteilten Gehäuse mit Dichtelementen angeordnet sind. Am Gehäuse befindet sich ein fünfpoliger Anschlußstecker mit Kontaktstiften, an denen die elektrischen Anschlußleitungen der Komponenten angelötet sind. Nachteilig ist, daß das Proportional-Magnetrelaisventil groß und schwer ist und viel Einbauplatz benötigt und aufwendige Dichtungsmaßnahmen erfordert, da die Komponenten gedichtet im Gehäuse installiert werden müssen. Die gelöteten Verbindungen sind durch die im Fahrbetrieb auftretenden Schwingungen störanfällig.

Die Aufgabe der vorliegenden Erfindung besteht darin, eine Magnetspulen-Drucksensoreinheit der eingangs genannten Art so auszubilden, daß eine kompakte, kleine Bauweise mit geringen Kosten ermöglicht wird und die Gefahr von Störungen, insbesondere durch Schwingungen weitestgehend vermieden ist.

Diese Aufgabe wird durch die Erfindung gemäß Anspruch 1 gelöst.

Vorteilhafte und zweckmäßige Weiterbildungen der Aufgabenlösung sind in den Unteransprüchen angegeben.

Durch die erfindungsgemäße Aufgabenlösung wird der Sensor in den Magnetspulenkörper integriert, so daß aufwendige Dichtungsmaßnahmen entfallen können. Der Sensor sitzt und mißt den ausgesteuerten Druck somit dort, wo auch der zu sensierende Ausgangsdruck am Ventil ansteht, wodurch die Gefahr von Störungen verringert ist. Der Sensor wird über drei im vorhandenen Ventilmagnetstecker zusätzlich vorgesehene Kontaktstifte kontaktiert. Die erfindungsgemäße Lösung ist für Modulatoren ohne eigene elektronische Steuereinheit besonders geeignet.

Gemäß einer vorteilhaften Weiterbildung sind die Kontaktstifte über durch den Spulenkörper durchgeführte im Spulenkörper eingebettete Leitungen mit den Steckerstiften des Anschlußstekkers verbunden, wobei die Leitungen vorzugsweise als Stanzgitter ausgebildet sind, wobei zwei separate Stanzgitter, ein Magnetventil- und ein Drucksensorstanzgitter vorgesehen sind. Hierdurch werden die Störanfälligkeit, insbesondere durch Schwingungen, und der Platzbedarf weiter reduziert.

Die Erfindung soll nachfolgend anhand der beigefügten Zeichnung, die ein Ausführungsbeispiel einer erfindungsgemäßen Magnetspulen-Drucksensoreinheit in einer schematischen Vorderansicht mit Blick auf einen Anschlußstecker zeigt, näher erläutert werden.

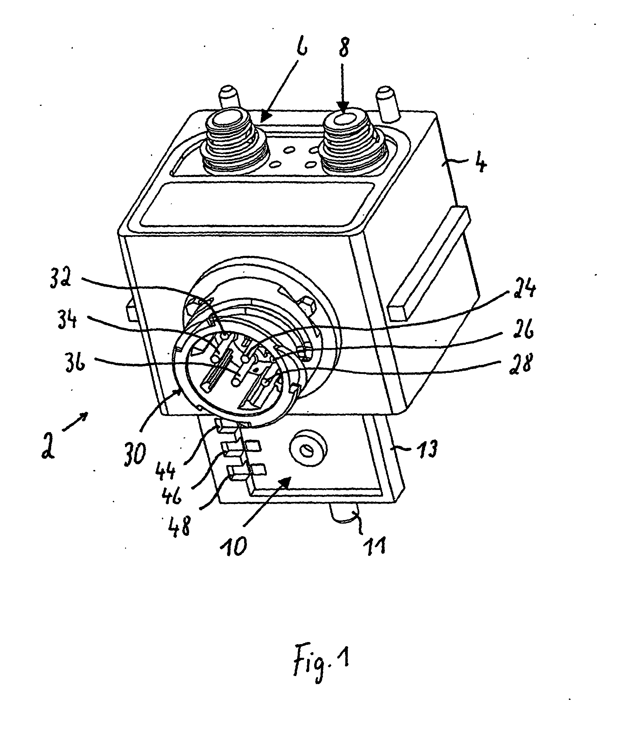

Es zeigt
- Fig. 1: eine schematische perspektivische Darstellung einer Magnetspulen-Drucksensoreinheit,

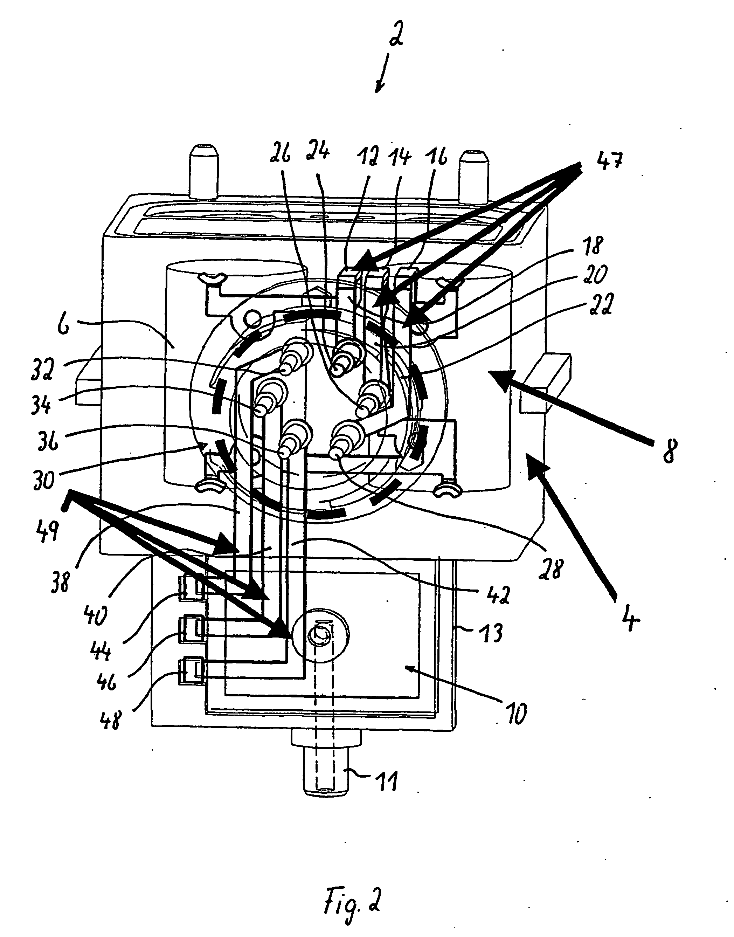

- Fig. 2: die Magnetspulen-Drucksensoreinheit nach Fig. 1 in einer schematischen, den inneren Aufbau zeigenden Darstellung und
- Fig. 3: eine pneumatische Schaltung der Magnetspulen-Drucksensoreinheit.

Gleiche Bauteile in den Figuren der Zeichnung sind mit den gleichen Bezugszeichen versehen.

Die Zeichnung zeigt eine Magnetspulen-Drucksensoreinheit 2 für mit Magnetregelventilen ausgestatte EBS-Modulatoren von elektronisch geregelten elektro-pneumatischen Bremsanlagen. Die Magnetspulen-Drucksensoreinheit 2 weist einen Spulenkörper 4, zwei Spulen 6, 8 und einen in den Spulenkörper integrierten Drucksensor 10 mit einem Druckleitungsanschluß 11 auf. Der Drucksensor 10 ist an einem Spulenkörperansatz 13 angebracht.

Elektrische Anschlüsse 12, 14, 16 der Spulen 6, 8 sind über durch den Spulenkörper durchgeführte Leiter 18, 20, 22 mit Steckerstiften 24, 26, 28 eines Anschlußsteckers 30, insbesondere eines Bajonettsteckers, verbunden. Der Anschlußstecker 30 ist mit drei weiteren Steckerstiften 32, 34, 36 versehen, die ebenfalls über durch den Spulenkörper durchgeleitete Leiter 38, 40, 42 mit elektrischen Anschlüssen 44, 46, 48 des Drucksensors 10 verbunden sind.

Die Leiter 18, 20, 22 und 38, 40, 42 sind im Spulenkörper eingebettet und vorzugsweise als Stanzgitter 47,49 ausgebildet, wobei zwei separate Stanzgitter, ein Magnetventilstanzgitter 47 und ein Drucksensorstanzgitter 49, vorgesehen sind.

Der Spulenkörper 4 wird durch Umspritzung der Spulen 6, 8 hergestellt, wobei die Umspritzung zugleich das dazugehörige Steckerteil bildet und der Drucksensor im Ansatz 13 in die Umspritzung der Spule mit integriert ist.

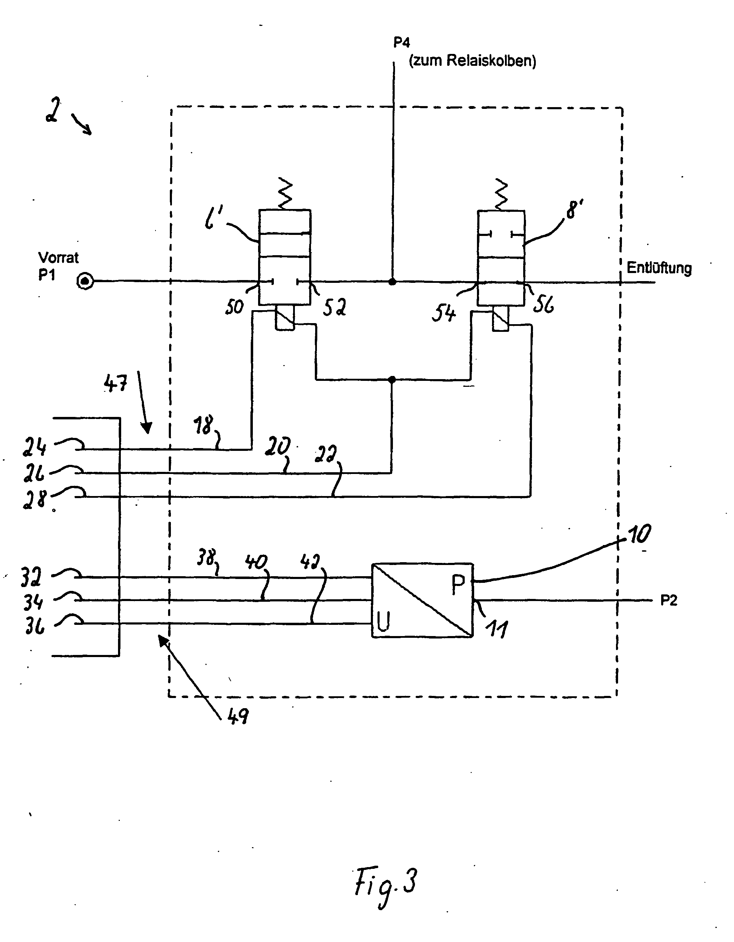

Die Fig. 3 zeigt eine pneumatische Schaltung der Magnetspulen-Drucksensoreinheit 2 mit dem Drucksensor 10 und mit den beiden Magnetventilen 6' und 8', die als 2/2 Wegemagnetventile ausgebildet sind und die über die elektrischen Leiter 18, 20, 22 und elektrischen Kontaktstifte 24, 26 und 28 von einem nicht dargestellten Steuergerät gesteuert werden.

Der pneumatische Eingang 50 des ersten Magnetventils 6' ist mit dem Versorgungsdruck P1 verbunden. Der pneumatische Ausgang 52 dieses Magnetventils ist mit dem Eingang eines nicht dargestellten Relaisventils (Ausgangsdruck P4) und mit dem pneumatischen Eingang 54 des zweiten Magnetventils 8' verbunden. Der pneumatische Ausgang des Relaisventils ist mit den ebenfalls nicht dargestellten Bremszylindern verbunden. Der pneumatische Ausgang 56 des zweiten Magnetventils 8' ist mit einer Drucksenke (Entlüftung) verbunden. Der Drucksensor 10 wird über einen pneumatischen Anschluß 11 mit einem die Bremszylinder beaufschlagenden Druck P2 beaufschlagt und erzeugt ein durch diesen Druck P2 entsprechendes elektrisches Signal, das über die elektrischen Leiter 38, 40, 42 und die Kontaktstifte 32, 34 und 36 dem elektrischen Steuergerät zugeführt wird, wodurch sich ein geschlossener Regelkreis ergibt.

Die Fig. 3 zeigt die pneumatische Schaltung im Zustand "Fahren", in dem die Ventilmagnete des ersten und zweiten Magnetventils 6' und 8' erregt sind, wobei das erste Magnetventil gesperrt ist und das zweite Magnetventil offen ist, so daß der Bremsdruck ins Freie entlüftet wird. Zum Druckaufbau in den Bremszylindern wird der am Eingang 50 des ersten stromlos offenen Magnetventils 6' anstehende Druck über den Ausgang 52 zu den Bremszylindern durchgesteuert (Druck P4) und wird das zweite Magnetventil 8' gesperrt. Zum Druckhalten wird der Ventilmagnet des ersten Magnetventils 6' erregt, wodurch dieses Magnetventil geschlossen wird und der am Eingang anstehende Druck vom Ausgang abgesperrt wird.

## Patentansprüche

1. Magnetspulen-Drucksensoreinheit (2) für mit Magnetregelventilen ausgestattete EBS-Modulatoren von elektronisch geregelten elektro-pneumatischen Bremsanlagen mit wenigstens einer in einem Spulenkörper (4) angeordneten Spule (6, 8) mit elektrischen Anschlüssen (12, 14, 16), mit einem zur Erfassung des ausgesteuerten Druckes vorgesehenen Drucksensor (10) mit elektrischen Anschlüssen (44, 46, 48) und mit einem am Spulenkörper (4) angeordneten elektrischen Anschlußstecker (30) mit mehreren Steckerstiften (24, 26, 28, 32, 34, 36), die über Leiter (18, 20, 22, 38, 40, 42) mit den elektrischen Anschlüssen (12, 14, 16, 44, 46, 48),der wenigstens einen Spule (6, 8) und des Drucksensors (10) verbunden sind, **dadurch gekennzeichnet, daß** der Drucksensor (10) in den Spulenkörper (4) integriert ist und daß die Leiter (18, 20, 22; 38, 40, 42), die die elektrischen Anschlüsse (12, 14, 16; 44, 46, 48) der wenigstens einen Spule (6, 8) und des Drucksensors (10) mit den Steckerstiften (24, 26, 28; 32, 34, 36) des Anschlußsteckers (30) verbinden, im Spulenkörper eingebettet und durch den Spulenkörper (4) durchgeleitet sind.

2. Magnetspulen-Drucksensoreinheit nach Anspruch 1, **dadurch gekennzeichnet, daß** die Leiter (18, 20, 22; 38, 40, 42) als Stanzgitter (47,49) ausgebildet sind.

3. Magnetspulen-Drucksensoreinheit nach Anspruch 2, **dadurch gekennzeichnet, daß** zwei separate Stanzgitter, ein Stanzgitter (47) für die Magnetspulen (6, 8) und ein Stanzgitter (49) für den Drucksensor (10), vorgesehen sind.

4. Magnetspulen-Drucksensoreinheit nach Anspruch 1 oder 3, **dadurch gekennzeichnet, daß** der Drucksensor (10) in einem Ansatz (13) des Spulenkörpers (4) angeordnet ist.

5. Magnetspulen-Drucksensoreinheit nach Anspruch 4, **dadurch gekennzeichnet, daß** der Spulenkörper (4) nebst Ansatz (13) durch eine Kunststoffumspritzung der Magnetspulen (6, 8) gebildet ist.

6. Magnetspulen-Drucksensoreinheit nach einem der vorhergehenden Ansprüche mit folgenden Merkmalen:
a) ein pneumatischer Eingang (50) des einen Magnetventils (6') ist mit dem Versorgungsdruck verbunden,
b) ein pneumatischer Ausgang (52) des ersten Magnetventils (6') ist mit einem Relaisventil und mit einem pneumatischen Eingang (54) des zweiten Magnetventils (8') verbunden,
c) ein pneumatischer Ausgang (56) des zweiten Magnetventils (8') ist mit einer Drucksenke (Entlüftung) verbunden,
d) ein pneumatischer Anschluß (11) des Drucksensors (10) ist mit dem Bremszylinderdruck (P2) verbunden,
e) elektrische Steuerleitungen (18, 20, 22) verbinden die Spulen (6, 8) der Magnetventile (6', 8') mit einem elektronischen Steuergerät,
f) elektrische Signalleitungen (38, 40, 42) verbinden den Signalausgang des Drucksensors (10), der dem Bremszylinderdruck (P2) entsprechende Signale erzeugt, mit dem Steuergerät,
g) dem elektronischen Steuergerät wird eingangseitig eine vom Fahrer initiierte elektrische Bremsvorgabe zugeführt.

7. Magnetspulen-Drucksensoreinheit nach Anspruch 6, **dadurch gekennzeichnet, daß**
a) zum Druckaufbau in den Bremszylindern das erste Magnetventil (6') durch Entregung seiner Spule (6) in die Offenstellung und das zweite Magnetventil (8') durch Entregung seiner Spule in die Sperrstellung gesteuert werden,
b) zum Druckabbau der Bremse das erste Magnetventil (6') durch Erregung in die Sperrstellung und das zweite Magnetventil (8') durch Erregung in die Offenstellung gesteuert werden und
c) zum Druckhalten das erste Magnetventil durch Erregen in die Sperrstellung und das zweite Magnetventil durch Entregung in der Sperrstellung gesteuert werden.

## Claims

1. Solenoid coil pressure sensor unit (2) for EBS modulators of electronically controlled electro-pneumatic braking systems, which EBS modulators are provided with solenoid control valves, having at least one coil (6, 8) having electrical connections (12, 14, 16) which is arranged in a coil body (4), having a pressure sensor (10) having electrical connections (44, 46, 48) which is provided for ascertaining the delivered pressure, and having, arranged on the coil body (4), an electrical connection plug (30) having a plurality of plug pins (24, 26, 28, 32, 34, 36) which are connected, by way of conductors (18, 20, 22, 38, 40, 42), to the electrical connections (12, 14, 16, 44, 46, 48) of the at least one coil (6, 8) and of the pressure sensor (10), **characterised in that** the pressure sensor (10) is integrated into the coil body (4); and the conductors (18, 20, 22; 38, 40, 42) which connect the electrical connections (12, 14, 16; 44, 46, 48) of the at least one coil (6, 8) and of the pressure sensor (10) to the plug pins (24, 26, 28; 32, 34, 36) of the connection plug (30) are embedded in the coil body and pass through the coil body (4).

2. Solenoid coil pressure sensor unit according to claim 1, **characterised in that** the conductors (18, 20, 22; 38, 40, 42) are in the form of stamped-out arrays (47, 49).

3. Solenoid coil pressure sensor unit according to claim 2, **characterised in that** two separate stamped-out arrays - one stamped-out array (47) for the solenoid coils (6, 8) and one stamped-out array (49) for the pressure sensor (10) - are provided.

4. Solenoid coil pressure sensor unit according to claim 1 or 3, **characterised in that** the pressure sensor (10) is arranged in a projecting portion (13) of the coil body (4).

5. Solenoid coil pressure sensor unit according to claim 4, **characterised in that** the coil body (4) together with the projecting portion (13) is formed by a plastics material injection-moulded around the solenoid coils (6, 8).

6. Solenoid coil pressure sensor unit according to one of the preceding claims, having the following features:
a) a pneumatic input (50) of a first solenoid valve (6') is connected to the supply pressure,
b) a pneumatic output (52) of the first solenoid valve (6') is connected to a relay valve and to a pneumatic input (54) of the second solenoid valve (8'),
c) a pneumatic output (56) of the second solenoid valve (8') is connected to a pressure sink (vent),
d) a pneumatic connection (11) of the pressure sensor (10) is connected to the brake cylinder pressure (P2),
e) electrical control lines (18, 20, 22) connect the coils of the solenoid valves (6', 8') to an electronic control device,
f) electrical signal lines (38, 40, 42) connect the signal output of the pressure sensor (10) - which generates signals that correspond to the brake cylinder pressure (P2) - to the electronic control device,
g) the electronic control device is supplied, on the input side, with an electrical braking instruction initiated by the driver.

7. Solenoid coil pressure sensor unit according to claim 6, **characterised in that**,
a) for building up pressure in the brake cylinders, the first solenoid valve (6') is set to the open position by de-energisation of its coil (6) and the second solenoid valve (8') is set to the closed position by de-energisation of its coil,
b) for reducing brake pressure, the first solenoid valve (6') is set to the closed position by energisation and the second solenoid valve (8') is set to the open position by energisation, and
c) for maintaining pressure, the first solenoid valve is set to the closed position by energisation and the second solenoid valve is set to the closed position by de-energisation.

## Revendications

1. Unité (2) de capteur de pression à bobines magnétiques pour des modulateurs EBS équipés de soupapes de régulation magnétiques, d'installations de freinage électro-pneumatiques réglées par voie électronique et comportant une bobine (6,8) disposée dans un corps de bobine (4) et possédant des bornes électriques (12,14,16), comportant un capteur de pression (10) prévu pour détecter la pression commandée, des bornes électriques (44,46,48) et un connecteur électrique de raccordement (3a) qui est disposé sur le corps de bobine (4) et comportant plusieurs broches de connexion (24,26,28,32,34,36), qui sont reliées aux bornes électriques (12,14,16,44,46,48) d'au moins une bobine (6,8) et du capteur de pression (10), par l'intermédiaire de conducteurs (18, 20, 22, 38, 40, 42), **caractérisée en ce que** le capteur de pression (10) est intégré dans le corps de bobine (4) et que les conducteurs (18,20,22;38,40,42), qui relient les bornes électriques (12,14,16;44,46,48) de la au moins une bobine (6,8) et du capteur de pression (10) aux broches de connexion (24,26,28;32,34,36) du connecteur de raccordement (30) sont insérés dans le corps de bobine et traversent par le corps de bobine (4).

2. Unité de capteur de pression à bobines magnétiques selon la revendication 1, **caractérisée en ce que** les conducteurs (18,20,22;38,40,42) sont réalisés sous la forme d'une grille découpée (47,49).

3. Unité de capteur de pression à bobines magnétiques selon la revendication 2, **caractérisée en ce qu'**il est prévu deux grilles découpées séparées, une grille découpée (47) pour les bobines magnétiques (6,8) et une grille découpée (49) pour le capteur de pression (10).

4. Unité de capteur de pression à bobines magnétiques selon la revendication 1 ou 3, **caractérisée en ce que** le capteur de pression (10) est disposé dans un organe saillant (13) du corps de bobine (4).

5. Unité de capteur de pression à bobines magnétiques selon la revendication 4, **caractérisée en ce que** le corps de bobine (4) est formé, en dehors de l'organe (13), par un enrobage de matière plastique, formé par injection, des bobines magnétiques (6,8).

6. Unité de capteur de pression à bobines magnétiques selon l'une des revendications précédentes, présentant les caractéristiques suivantes :
a) une entrée pneumatique (50) de la première soupape magnétique (6') est reliée à la pression d'alimentation,
b) une sortie pneumatique (52) de la première soupape magnétique (6') est reliée à une soupape relais et à une entrée pneumatique (54) de la seconde soupape magnétique (8'),
c) une sortie pneumatique (56) de la seconde soupape magnétique (8') est reliée à un puits de pression (désaération),
d) un raccord pneumatique (11) du capteur de pression (10) est relié à la pression (P2) du cylindre de frein,
e) des conducteurs électriques de commande (18,20,22) relient les bobines (6,7) des soupapes magnétiques (6', 8') à un appareil de commande électronique,
f) les lignes électriques de transmission de signaux (38, 40,42) relient la sortie du signal du capteur de pression (10), qui produit des signaux correspondant à la pression (P2) du cylindre de frein, sont reliées à l'appareil de commande,
g) côté entrée, une prescription électrique de freinage déclenchée par le conducteur est envoyée à l'appareil de commande électronique.

7. Unité de capteur de pression à bobines magnétiques selon la revendication 6, **caractérisée en ce que**
a) pour l'établissement de la pression dans les cylindres de frein, la première soupape magnétique (6') est commandée par désexcitation de sa bobine (6) dans la position ouverte et la seconde soupape de commande (8') est commandée par désexcitation de sa bobine dans la position fermée,
b) pour la suppression de la pression du frein, la première soupape magnétique (6') est commandée par excitation dans la position de blocage et la seconde soupape magnétique (8') est commandée dans la position ouverte par excitation,
c) pour le maintien de la pression, la première soupape magnétique est commandée par excitation dans la position de blocage et la seconde soupape magnétique est commandée par désexcitation dans la position de blocage.
